# EUROPEAN PATENT APPLICATION

(11) **EP 2 822 090 A1**
(43) Date of publication of application: **07.01.2015**
(21) Application number: 14175415.0
(22) Date of filing: 02.07.2014
(51) Int. Cl.: H01P 5/08

(54) **A communication system**

(30) Priority: 02.07.2013 GB 201311871
(71) Applicant: ROKE MANOR RESEARCH LIMITED, Romsey, Hampshire SO51 0ZN (GB)
(72) Inventor: Jessup, Michael, Romsey, Hampshire SO51 0ZN (GB); Turner, Janice, Romsey, Hampshire SO51 0ZN (GB)
(74) Representative: Thompson, Andrew John

(57) **Abstract**

A communications system, comprising: a surface wave channel for guiding electromagnetic surface waves; a transmitter, coupled to said surface wave channel for transmitting signals along said surface wave channel; one or more disrupters, arranged to be positioned at arbitrary locations on or adjacent said surface wave channel, and arranged to convert said surface wave signals to space wave signals; and one or more receiver terminals, arranged to be positioned at locations corresponding to said disrupters, each terminal comprising an antenna for receiving said space wave signals.

## Description

The present invention relates to a communications system.

### Background to the Invention

The applicant's prior published patent application GB2,494,435A discloses a communication system which utilises a guiding medium which is suitable for sustaining electromagnetic surface waves. The contents of GB2,494,435A are hereby incorporated by reference. The present application presents various applications and improvements to the system disclosed in GB2,494,435A.

### Summary of the Invention

In a first aspect, the present invention provides a communications system, comprising: a surface wave channel for guiding electromagnetic surface waves; a transmitter, coupled to said surface wave channel for transmitting signals along said surface wave channel; one or more disrupters, arranged to be positioned at arbitrary locations on or adjacent said surface wave channel, and arranged to convert said surface wave signals to space wave signals; and one or more receiver terminals, arranged to be positioned at locations corresponding to said disrupters, each terminal comprising an antenna for receiving said space wave signals.

In a second aspect, the present invention provides a surface wave to space wave converter, comprising: a surface wave collector; and an antenna; wherein the surface wave collector is coupled to the antenna; the surface wave collector is arranged to collect surface wave signals from a surface wave channel; and the antenna is arranged to radiate said signal as a space wave.

Further examples of features of the present invention are recited in the claims.

### Brief Description of the Drawings

Embodiments of the present invention will now be described, by way of example only, and with reference to the accompanying drawings, in which:
Figure 1 shows a communications system in accordance with an embodiment of the present invention;
Figure 2 shows a surface wave launcher for use with the system of Figure 1;
Figure 3 shows further details of the surface wave launcher of Figure 2; and
Figure 4 shows a surface wave to space wave converter in accordance with an embodiment of the present invention.

### Detailed Description of Embodiments of the Invention

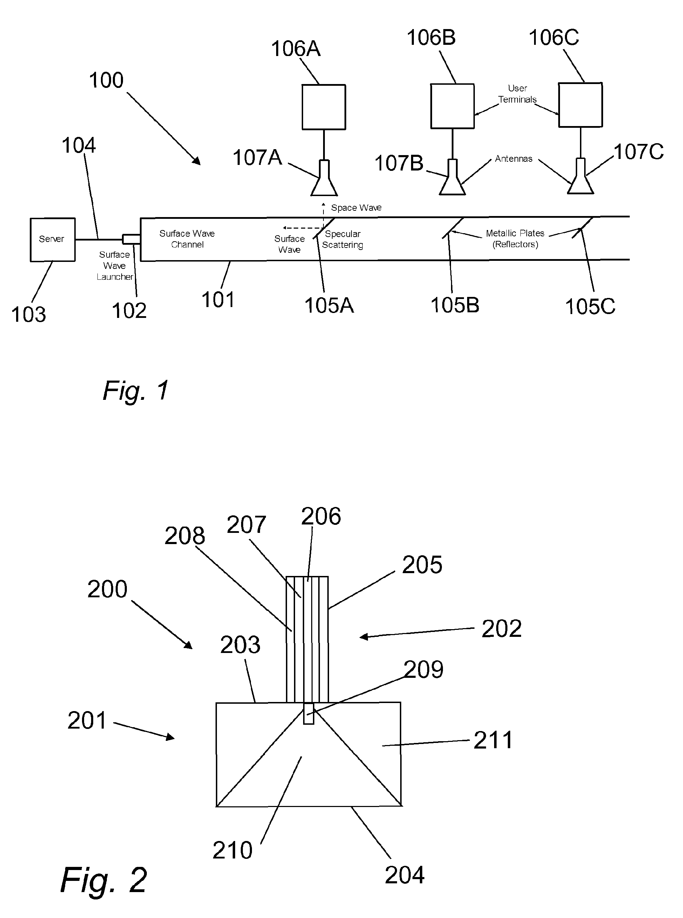

Figure 1 shows a communications system 100 in accordance with an embodiment of the present invention. The system 100 includes a surface wave channel 101. The surface wave channel may take the form of the surface wave channels disclosed in the applicant's published UK patent application, GB2,494,435A. In particular, the surface wave channel has a high surface impedance, and is suitable for guiding electromagnetic surface waves. The channel 101 is elongate, and is generally arranged to guide surface waves in the direction of its length. The channel may be made of a dielectric coated conductor, corrugated surface, or any other material which has a high surface impedance suitable for the transmission of electromagnetic surface waves.

The system 100 further comprises a surface wave launcher 102. The surface wave launcher 102 is arranged to convert electrical signals to surface wave signals. Further details of a suitable launcher are provided in GB2,494,435A, and are also described below. The system 100 also includes a server 103. The server 103 is coupled to the surface wave launcher 102 by connection 104. The server 103 is includes a transmitter, and is arranged to transmit data along the surface wave channel 101. The surface wave launcher 102 converts signals received from the server 103 to surface wave signals.

The system 100 also includes a plurality of disrupters 105A, 105B, 105C. The disrupters may be positioned at arbitrary positions along the surface wave channel. The disrupters are arranged to disrupt the surface wave signals, and to cause the surface wave signals to be scattered as space waves. In the present embodiment, the disrupters 105A, 105B, 105C are metallic plates, which act as reflectors. The metallic plates are positioned on the surface wave channel so that they are perpendicular to the surface. They are orientated to cause specular scattering at an angle of ninety degrees to the direction of the channel. In order to achieve this, the plates are orientated at a forty five degree angle. In use, when a surface wave hits the plate, it is reflected as a space wave. The reflectors may be arranged to reflect the surface waves towards the edge of the channel 101, where they reradiate as space waves. Alternatively, the reflectors may be arranged to reflect the surface waves upwards, away from the surface.

The system 100 also includes a plurality of user terminals 106A, 106B, 106C. Each user terminal is coupled to an antenna 107A, 107B, 107C. The antennas are arranged to receive the space waves reflected from the disrupters 105A, 105B, 105C. As such, in use, the antennas and their corresponding user terminals are positioned in close proximity to the positions of the corresponding disrupters. In particular, the antennas 107A, 107B, 107C are positioned close enough to the disrupters so that they may adequately receive the space wave signals.

The user terminals 106A, 106B, 106C may include a user interface which may include a display. The terminals may therefore be arranged to display data sent by the server 103. One application of this system may be in a television broadcast system. For example, the system may be used as an in-flight entertainment system on a passenger airplane.

In use, the server 103 broadcasts a data signal which may include multimedia data to be viewed by the user terminals 106A, 106B, 106C. The signal is converted to a surface wave by surface wave launcher 102. The surface wave propagates along the surface wave channel 101. The disrupters 105A, 105B, 105C are positioned such that only some of the surface wave is reflected, the remainder propagating along the surface channel towards the other disrupters. The reflected surface wave propagates as a space wave towards a corresponding antenna 107A, 107B, 107C. The space wave is then converted to an electrical signal by the corresponding antenna. The converted signal is then received by the corresponding user terminal 106A, 106B, 106C.

Figure 2 shows an example of a surface wave launcher which may be used with the system 100 shown in Figure 1. Figure 2 shows a surface wave launcher 200 in accordance with a first embodiment of the present invention. The surface wave launcher includes a parallel-plate waveguide 201 and a feed section 202. The waveguide 201 includes a feed end 203 and a launch end 204. The feed section 202 is coupled to the waveguide 201 as the feed end 203. The feed section includes a coaxial cable 205. The coaxial cable includes an inner conductor 206, an insulating layer 207 and an outer conductor 208. The feed section 202 also includes a coupling pin 209 which is connected to the inner conductor 206 at an end of the coaxial cable.

The waveguide 201 is a rectangular cuboid. The waveguide 201 includes a first planar conductor 210, which is forms an upper surface of the waveguide. The first planar conductor 210 forms an isosceles triangle, the top vertex of which is connected to the coupling pin 209. The waveguide 201 also includes a dielectric layer 211, positioned below the first planar conductor 210, and which is also a rectangular cuboid. The dielectric 211 is preferably low loss for the frequency of operation. The waveguide 201 also includes a second planar conductor (not shown in Figure 2), which is positioned behind the dielectric layer 211. The second planar conductor is rectangular in shape, and completely covers the underside of the dielectric 211.

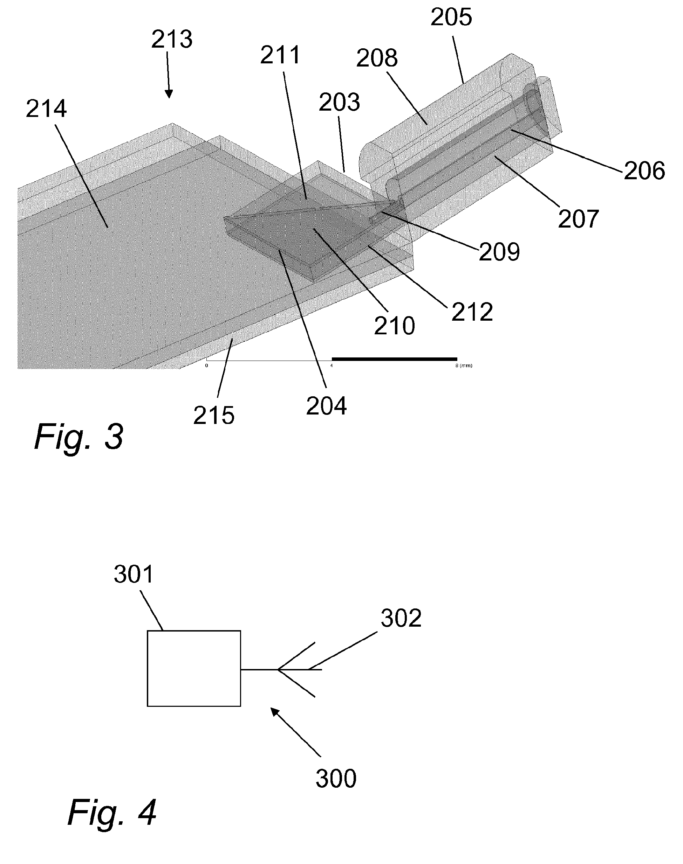

Figure 3 shows a cross-section through launcher 200. The features of the launcher 200 are labelled in the same manner as in Figure 2. In Figure 3, the second planar conductor 212 is shown. The outer conductor 208 of the coaxial cable 205 is coupled to the second planar conductor 212.

Figure 3 also shows a guiding medium 213 with which the surface wave launcher 200 is arranged to operate. The guiding medium may be similar to that described in the applicant's previously published UK patent application GB2,494,435A. The guiding medium 213 includes a dielectric layer 214 and a conductive layer 215. Together they form a dielectric coated conductor with a reactive impedance which is higher than the resistive impedance. Such a surface is suitable for the propagation of electromagnetic surface waves. In use, the launcher 200 can be placed at a shallow angle to the surface of a guiding medium 213 to launch waves in a particular direction. The performance of the launcher 200 at a particular frequency can be optimised by changing the length of the triangle.

The surface wave launcher 200 may also operate in reverse, as a surface wave collector. Furthermore, the system 100 may operate in reverse, with user terminals transmitting signals which are reflected by the disrupters onto the surface wave channel, to generate surface waves.

As noted, above the system 100 includes a number of disrupters. Figure 4 shows a surface wave to space wave converter 300 in accordance with an alternative embodiment of the present invention. The converter 300 includes a surface wave collector 301 and an antenna 302. An output of the surface wave collector 301 is coupled to an input of the antenna 302. The collector 301 may take the form of the surface wave launcher described above in connection with Figures 2 and 3. As noted there, the surface wave launcher may operate in reverse as a surface wave collector. In use, the waveguide of the surface wave collector is positioned against the surface wave channel 101. The collector 301 collects surface waves and converts them to electrical signals which are sent to the antenna 302. The antenna 302 then radiates a corresponding space wave which may be received by a user terminal. The antenna 302 may take many forms. For example, it can be directional or omni-directional depending on the requirements of the system.

In an alternative embodiment of the present invention, the converter 300 may be used to transmit a space wave signal to another converter, which then launchers a surface wave onto a further surface wave channel. This embodiment could be used where it is not possible to lay a surface wave channel, for example where a gap needs bridging.

In the above-described embodiments, surface wave launchers and surface wave collectors have been described. These devices may in fact identical in construction. However, in use, the device will either act to "collect" surface waves, or to "launch" surface waves. The terminology used above has been selected dependent on the context in which the device is being used. It will be appreciated that in some contexts, the devices may be used for both purposes, even though they are referred to as either collectors or launchers.

Features of the present invention are defined in the appended claims. While particular combinations of features have been presented in the claims, it will be appreciated that other combinations, such as those provided above, may be used.

Further modifications and variations of the aforementioned systems and methods may be implemented within the scope of the appended claims.

## Claims

1. A communications system, comprising:
a surface wave channel for guiding electromagnetic surface waves;
a transmitter, coupled to said surface wave channel for transmitting signals along said surface wave channel;
one or more disrupters, arranged to be positioned at arbitrary locations on or adjacent said surface wave channel, and arranged to convert said surface wave signals to space wave signals; and
one or more receiver terminals, arranged to be positioned at locations corresponding to said disrupters, each terminal comprising an antenna for receiving said space wave signals.

2. A communications system according to claim 1, wherein said surface wave channel comprises a first surface, the first surface having an electrical impedance suitable for the propagation of electromagnetic surface waves.

3. A communications system according to claims 1 or 2, further comprising a surface wave launcher, arranged to couple said transmitter to said surface wave channel.

4. A communications system according to claim 3, wherein said surface wave launcher is arranged to convert electrical signals to surface waves.

5. A communications system according to claim 4, wherein said surface wave launcher comprises a waveguide, having a feed end and a launch end, and wherein said surface wave launcher further comprises: a feed structure coupled to the feed end of the waveguide; wherein the feed structure includes a first conductor; the waveguide comprises a first planar conductive layer coupled to the first conductor; and the waveguide is arranged to be positioned adjacent said surface wave channel.

6. A communications system according to any preceding claim, wherein said one or more disrupters is a reflector, arranged to be positioned on or adjacent the surface wave channel.

7. A communications system according to any of claims 1 to 5, wherein said one or more disrupters is a surface wave to space wave converter, the converters comprising: a surface wave collector and an antenna, the surface wave launcher coupled to said antenna.

8. A communications system according to claim 7, wherein said surface wave collector is arranged to positioned on or adjacent the surface wave channel and to convert surface wave signals to electrical signals.

9. A communications system according to claim 8, wherein said surface wave collector comprises a waveguide, having a collector end and a feed end, and wherein said surface wave collector further comprises: a feed structure coupled to the feed end of the waveguide; wherein the feed structure includes a first conductor; the waveguide comprises a first planar conductive layer coupled to the first conductor; and the waveguide is arranged to be positioned adjacent said surface wave channel.

10. A communications system according to any preceding claim, wherein one or more of the following apply: a) said surface wave channel is an elongate channel, having a launch end and a distal end; and said transmitter is arranged to transmit surface wave signals from said launch end to said distal end; b) said one or more receiver terminals is a plurality of receiver terminals, two or more of said terminals being positioned to receive signals from a single disrupter.

11. A surface wave to space wave converter, comprising: a surface wave collector; and an antenna; wherein the surface wave collector is coupled to the antenna; the surface wave collector is arranged to collect surface wave signals from a surface wave channel; and the antenna is arranged to radiate said signal as a space wave.

12. A converter according to claim 11, wherein said surface wave collector is arranged to positioned on or adjacent a surface wave channel and to convert surface wave signals to electrical signals, and wherein said surface wave collector comprises a waveguide, having a collector end and a feed end.

13. A converter according to claim 12, wherein said surface wave collector further comprises: a feed structure coupled to the feed end of the waveguide; wherein the feed structure includes a first conductor; the waveguide comprises a first planar conductive layer coupled to the first conductor; and the waveguide is arranged to be positioned adjacent a surface wave channel.

14. A converter according to claim 13, wherein said antenna is coupled to said feed structure, and is arranged to radiate a space wave signal.

15. A converter according to any of claims 11 to 14, wherein the converter is also a space wave to surface wave converter.
